# EUROPEAN PATENT APPLICATION

(11) **EP 4 755 566 A2**
(43) Date of publication of application: **10.06.2026**
(21) Application number: 25220249.4
(22) Date of filing: 02.12.2025
(51) Int. Cl.: B23K 26/08, H01M 4/04, H01M 4/139

(54) **ELECTRODE PLATE PROCESSING DEVICE**

(30) Priority: 04.12.2024 KR 20240178570
(71) Applicant: SAMSUNG SDI CO., LTD., Yongin-si, Gyeonggi-do 17084 (KR)
(72) Inventor: PYUN, Ah Ram, 16678 Suwon-si (KR); LEE, Jin Hyon, 16678 Suwon-si (KR); JEONG, Ji Soo, 16678 Suwon-si (KR); YOO, Chi Jong, 16678 Suwon-si (KR); CHOI, Dae Wook, 16678 Suwon-si (KR); CHOE, Yun Ju, 16678 Suwon-si (KR)
(74) Representative: Marks & Clerk LLP

(57) **Abstract**

An electrode plate processing device, including a plurality of rollers (10), a substrate (20) between the plurality of rollers, a self-supporting film (30) movable by the plurality of rollers, the self-supporting film being attached to the substrate, and a laser cutter (40) configured to cut the self-supporting film to a predetermined width using a laser beam of the laser cutter.

## Description

### BACKGROUND

### 1. Field

The present disclosure relates to an electrode plate processing device.

### 2. Description of the Related Art

Generally, as demand for portable electronic products such as notebook computers, video cameras, portable phones, and the like has rapidly increased and the commercialization of robots, electric vehicles, and the like has progressed in a full-fledged manner, research on high-performance secondary batteries capable of repeated charging and discharging is being actively conducted. In particular, lithium secondary batteries are widely used as energy sources for various electronic products due to their high energy density and operating voltage and excellent capacitance and lifetime characteristics.

Electrodes manufactured using slurries containing solvents use excessive amounts of solvent during the process of manufacturing the same.

In order to satisfy the miniaturization and high performance of electronic products, in addition to miniaturization and weight reduction of lithium batteries, high energy density of the lithium batteries is becoming important. That is, high-capacity lithium batteries are becoming important.

The above-described information disclosed in the technology that forms the background of the present disclosure is provided to improve understanding of the background of the present disclosure, and thus may include information that does not constitute the related art.

### SUMMARY

The present invention is directed to providing an electrode plate processing device which does not cause damage to rollers in a process of cutting a self-supporting film to correspond to an adhesive layer of a substrate and is capable of suppressing foreign substances from being generated when cutting the self-supporting film.

According to an aspect of the present invention, there is provided an electrode plate processing device, including a plurality of rollers, a substrate between the plurality of rollers, a self-supporting film movable by the plurality of rollers, the self-supporting film being attached to the substrate, and a laser cutter configured to cut the self-supporting film to a predetermined width using a laser beam of the laser cutter.

The plurality of rollers may include one or more first rollers arranged in a first lateral direction of the substrate, and one or more second rollers arranged in a second lateral direction of the substrate.

The one or more first rollers may include a first attachment roller close to the substrate, the first attachment roller guiding or configured to guide the self-supporting film to be attached to the substrate, and one or more first transfer rollers guiding or configured to guide the self-supporting film to the first attachment roller.

The one or more second rollers may include a second attachment roller close to the substrate, the second attachment roller guiding or configured to guide the self-supporting film to be attached to the substrate, and one or more second transfer rollers guiding or configured to guide the self-supporting film to the second attachment roller.

The laser cutter may include a laser transmitter emitting or configured to emit the laser beam toward a moving path of the self-supporting film, and a laser receiver receiving or configure to receive the laser beam from the laser transmitter.

The laser cutter may further include a position adjustment unit configured to adjust a position of the laser transmitter and a position of the laser receiver.

The position adjustment unit may include a main support fixed on a fixture, a transmitter support coupled to the main support, the transmitter support supporting or configured to support the laser transmitter and being adjustable in length, and a receiver support coupled to the main support, the receiver support supporting or configured to support the laser receiver and being self-adjustable in length.

The position adjustment unit may be configured to fix the position of the laser transmitter and the position of the laser receiver while cutting the self-supporting film.

The position adjustment unit may be configured to change the position of the laser transmitter and the position of the laser receiver while cutting the self-supporting film.

The laser cutter may emit or may be configured to emit the laser beam parallel to a moving direction of the self-supporting film.

The laser cutter may include a lower cutter configured to cut the self-supporting film while the self-supporting film passes lower portions of the plurality of rollers.

The laser cutter may include an upper cutter configured to cut the self-supporting film while the self-supporting film passes passing upper portions of the plurality of rollers.

The laser cutter may include a lower cutter for cutting the self-supporting film while the self-supporting film passes lower portions of the plurality of rollers, and an upper cutter for cutting the self-supporting film while the self-supporting film passes upper portions of the plurality of rollers.

The laser cutter may emit or may be configured to emit the laser beam perpendicular to a moving direction of the self-supporting film.

The laser cutter may cut or may be configured to cut the self-supporting film while the self-supporting film passes between the plurality of rollers.

A width of the laser beam from the laser cutter may be smaller than a gap between the plurality of rollers.

The electrode plate processing device may further include a sensor unit configured to detect a state of at least one of the plurality of rollers, the substrate and the self-supporting film, and a control unit configured to receive a detection signal of the sensor unit and control an operation of the laser cutter.

The sensor unit may be further configured to detect whether a gap between the plurality of rollers is within a predetermined distance.

The sensor unit may be further configured to detect whether the plurality of rollers are processed by the laser cutter.

The sensor unit may be further configured to detect a width of an adhesive layer of the substrate.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a schematic side view illustrating an electrode plate processing device according to an embodiment of the present disclosure;
FIG. 2 is a schematic plan view illustrating the electrode plate processing device according to an embodiment of the present disclosure;
FIG. 3 is a schematic view illustrating a laser cutter according to an embodiment of the present disclosure;
FIG. 4 is a schematic view illustrating a state in which the laser cutter according to an embodiment of the present disclosure is fixed and cuts a self-supporting film;
FIG. 5 is a schematic view illustrating a state in which the laser cutter according to an embodiment of the present disclosure moves and cuts the self-supporting film;
FIG. 6 is a schematic side view illustrating a state in which a laser cutter according to an embodiment of the present disclosure emits a laser beam to be parallel to a moving direction of a self-supporting film passing lower portions of rollers;
FIG. 7 is a schematic bottom view illustrating a state in which the laser cutter according to an embodiment of the present disclosure emits a laser beam to be parallel to the moving direction of the self-supporting film passing the lower portions of the rollers;
FIG. 8 is a schematic side view illustrating a state in which a laser cutter according to an embodiment of the present disclosure emits a laser beam to be parallel to a moving direction of a self-supporting film passing upper portions of the rollers;
FIG. 9 is a schematic bottom view illustrating a state in which the laser cutter according to an embodiment of the present disclosure emits a laser beam to be parallel to the moving direction of the self-supporting film passing the upper portions of the rollers;
FIG. 10 is a schematic side view illustrating a state in which a laser cutter according to an embodiment of the present disclosure emits a laser beam to be parallel to a moving direction of a self-supporting film passing the upper and lower portions of the rollers;
FIG. 11 is a schematic side view illustrating a state in which a laser cutter according to an embodiment of the present disclosure emits a laser beam to be perpendicular to the rollers and a moving direction of a self-supporting film passing the rollers;
FIG. 12 is a schematic plan view illustrating a state in which the laser cutter according to an embodiment of the present disclosure emits a laser beam to be perpendicular to the rollers and the moving direction of the self-supporting film passing the rollers;
FIG. 13 is a schematic side view illustrating a state in which a laser cutter according to another embodiment of the present disclosure emits a laser beam to be perpendicular to rollers and a moving direction of a self-supporting film passing the rollers;
FIG. 14 is a schematic plan view illustrating a state in which the laser cutter according to another embodiment of the present disclosure emits a laser beam perpendicular to the rollers and the moving direction of the self-supporting film passing the rollers;
FIG. 15 is a schematic view illustrating a state in which a sensor unit and a control unit are added to the electrode plate processing device according to an embodiment of the present disclosure;
FIG. 16 is a schematic view illustrating a state in which the sensor unit according to an embodiment of the present disclosure detects a gap between the rollers;
FIG. 17 is a schematic view illustrating a state in which the sensor unit according to an embodiment of the present disclosure detects whether the rollers are being processed; and
FIG. 18 is a schematic view illustrating a state in which the sensor unit according to an embodiment of the present disclosure detects an adhesive layer of a substrate.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

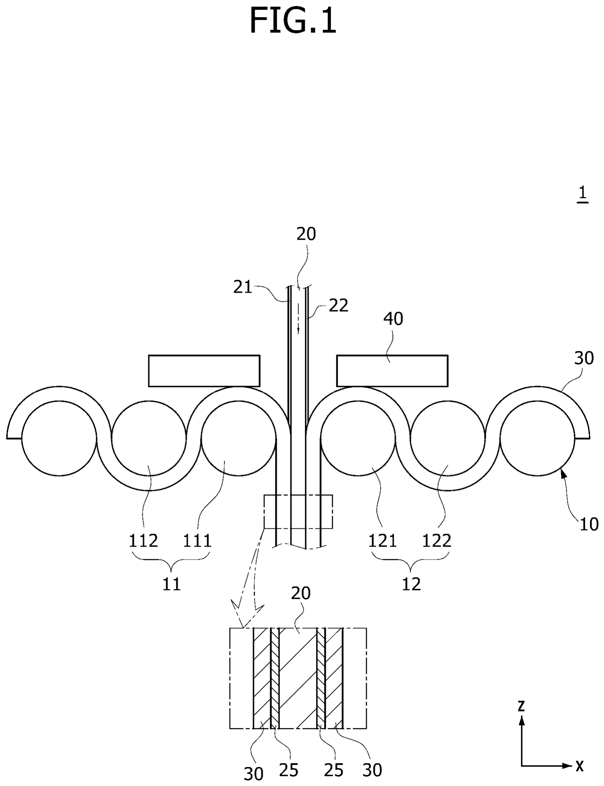

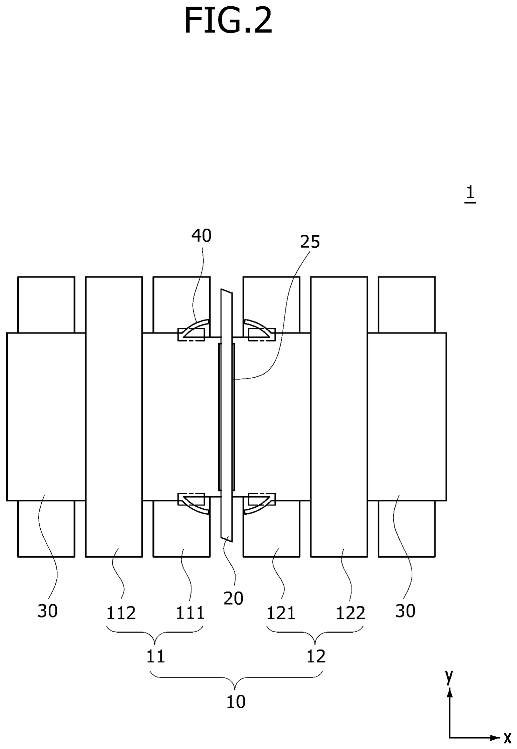

FIG. 1 is a schematic side view illustrating an electrode plate processing device 1 according to an embodiment of the present disclosure, and FIG. 2 is a schematic plan view illustrating the electrode plate processing device 1 according to an embodiment of the present disclosure. Referring to FIGS. 1 and 2, the electrode plate processing device 1 according to an embodiment of the present disclosure includes rollers 10, a substrate 20, self-supporting films 30, and a laser cutter 40.

Rollers 10 may be installed on a fixture so as to be rotatable. The rollers 10 may be arranged in an X-axis direction. The rollers 10 may have a cylindrical shape having a length in a Y-axis direction.

The substrate 20 may pass between the rollers 10. The substrate 20 may have a thin film shape. The substrate 20 may have a width in the Y-axis direction and a length in a Z-axis direction and move in the Z-axis direction. The substrate 20 may be used as an electrode plate in a secondary battery. The substrate 20 may be coated with an adhesive layer 25.

Self-supporting films 30 (e.g., "self-supporting" meaning no substrate is needed) may be moved by the rollers 10 and attached to the substrate 20. The self-supporting films 30 may be in close contact with the adhesive layer 25 and maintained in a state of being bonded to the substrate 20. The self-supporting films 30 may be supplied from both sides of the substrate 20 and attached to a first surface 21 and a second surface 22 that correspond to both surfaces of the substrate 20.

The laser cutter 40 may cut the self-supporting films 30 moving through the rollers 10 to have a proper width (e.g., predetermined width) using a laser beam. The laser cutter 40 may cut the self-supporting films 30 to have a length in the Y-axis direction to correspond to a width of the adhesive layer 25. The laser cutter 40 may be disposed as a pair of laser cutters in the Y-axis direction to cut edges of both sides of the self-supporting films 30.

The rollers 10 according to an embodiment of the present disclosure may include first rollers 11 and second rollers 12.

One or more of the first rollers 11 may be arranged in a first lateral direction of the substrate 20. The first rollers 11 may be arranged to face the first surface 21. The first rollers 11 may include a first attachment roller 111 and a first transfer roller 112.

The first attachment roller 111 may be disposed close (e.g., a thickness of the self-supporting films 30) to the substrate 20 and guide the self-supporting films 30 so that the self-supporting films 30 are attached to the substrate 20. The self-supporting films 30 that have passed the first attachment roller 111 may be attached to the substrate 20 while moving in the Z-axis direction. The first transfer roller 112 may guide the self-supporting films 30 to the first attachment roller 111. The first transfer roller 112 may be disposed as a plurality of first transfer rollers 112 in the X-axis direction to be spaced apart from each other. The self-supporting films 30 may alternately pass upper and lower portions of a plurality of the first transfer rollers 112 arranged to be spaced apart from each other. The self-supporting films 30 may move in the Z-axis direction while passing an upper portion of the first attachment roller 111 and then be attached to the substrate 20.

One or more of the second rollers 12 may be arranged in the second lateral direction of the substrate 20. The second rollers 12 may be arranged to face the second surface 22. The second rollers 12 may include a second attachment roller 121 and a second transfer roller 122.

The second attachment roller 121 may be disposed close to the substrate 20 and guide the self-supporting films 30 so that the self-supporting films 30 are attached to the substrate 20. The self-supporting films 30 that have passed the second attachment roller 121 may be attached to the substrate 20 while moving in the Z-axis direction. The second transfer roller 122 may guide the self-supporting films 30 to the second attachment roller 121. The second transfer roller 122 may be disposed as a plurality of the second transfer roller 122 in the X-axis direction to be spaced apart from each other. The self-supporting films 30 may alternately pass upper and lower portions of a plurality of second transfer rollers 122 arranged to be spaced apart from each other. The self-supporting films 30 may move in the Z-axis direction while passing an upper portion of the second attachment roller 121 to be attached to the substrate 20.

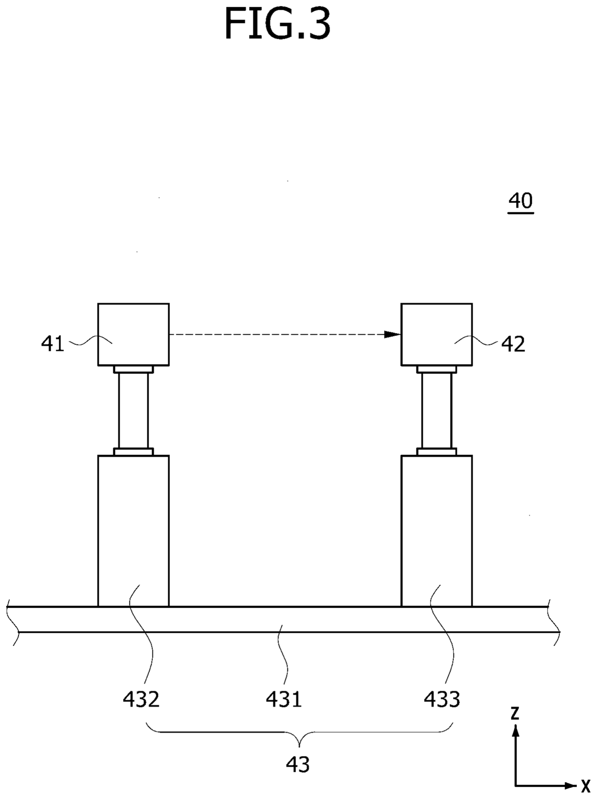

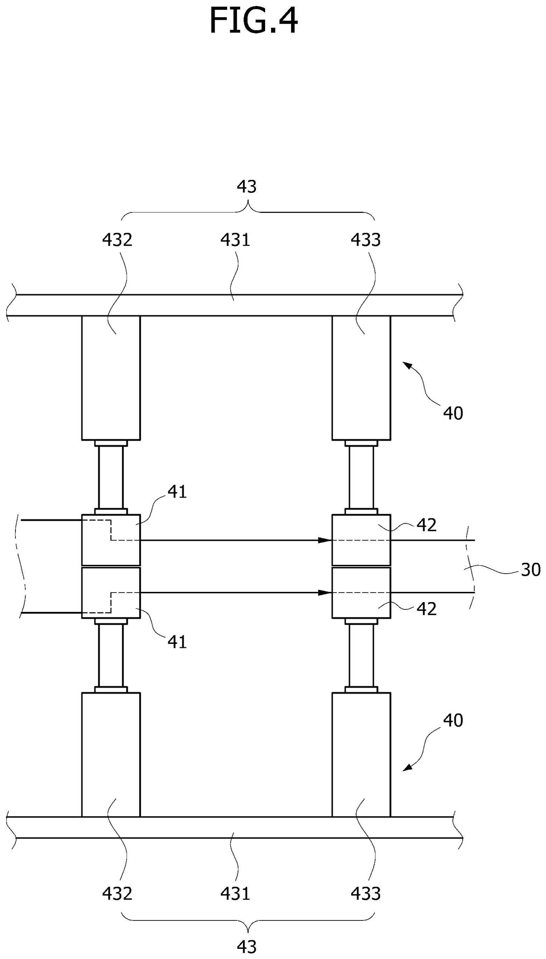

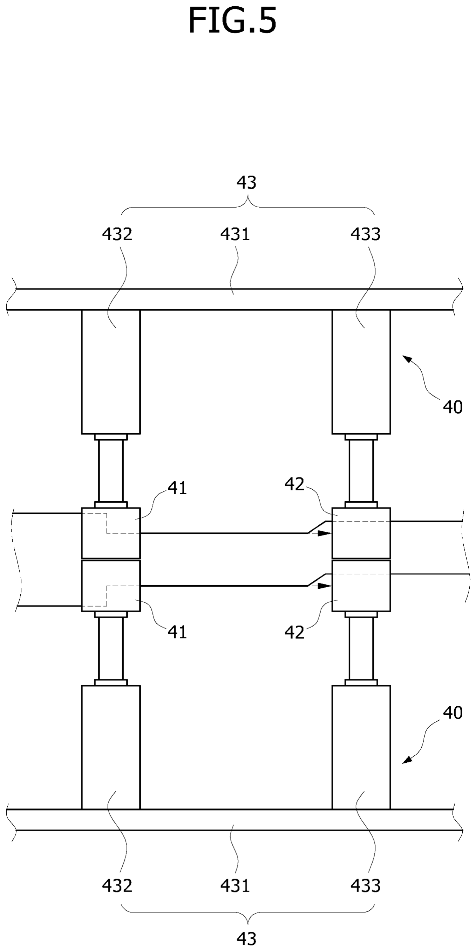

FIG. 3 is a schematic view illustrating a laser cutter 40 according to an embodiment of the present disclosure, FIG. 4 is a schematic view illustrating a state in which the laser cutter 40 according to an embodiment of the present disclosure is fixed and cuts a self-supporting film, and FIG. 5 is a schematic view illustrating a state in which the laser cutter 40 according to an embodiment of the present disclosure moves and cuts the self-supporting film 30. Referring to FIGS. 3 to 5, the laser cutter 40 according to an embodiment of the present disclosure may include a laser transmitter 41 and a laser receiver 42.

The laser transmitter 41 may emit a laser beam toward a moving path of the self-supporting films 30. The laser receiver 42 may receive the laser beam emitted from the laser transmitter 41. The laser beam emitted from the laser transmitter 41 may cut the self-supporting films 30.

The laser cutter 40 according to an embodiment of the present disclosure may further include a position adjustment unit 43 (e.g., position adjuster). The position adjustment unit 43 may adjust positions of the laser transmitter 41 and the laser receiver 42. The position adjustment unit 43 may include a main support 431, a transmitter support 432, and a receiver support 433.

The main support 431 may be fixedly installed on a fixture. The main support 431 may be coupled to a fixture such as the ground or a facility. The main support 431 may have a length in the X-axis or Z-axis direction.

The transmitter support 432 may be coupled to the main support 431 and may adjust a length thereof by itself. The transmitter support 432 may support the laser transmitter 41. One end portion of the transmitter support 432 may be coupled to the main support 431, and the other end portion of the transmitter support 432 may be coupled to the laser transmitter 41. The length of the transmitter support 432 may be adjusted by an operator or may be automatically adjusted by motor driving.

The receiver support 433 may be coupled to the main support 431 and may adjust a length thereof by itself. The receiver support 433 may support the laser transmitter 41. One end portion of the receiver support 433 may be coupled to the main support 431, and the other end portion of the receiver support 433 may be coupled to the laser transmitter 41. The length of the receiver support 433 may be adjusted by the operator or may be automatically adjusted by motor driving.

The position adjustment unit 43 may fix the positions of the laser transmitter 41 and the laser receiver 42 while the self-supporting films 30 are cut. When the positions of the laser transmitter 41 and the laser receiver 42 are fixed by the position adjustment unit 43, the self-supporting films 30 may be cut to have a uniform shape.

The position adjustment unit 43 may change the positions of the laser transmitter 41 and the laser receiver 42 while the self-supporting films 30 are cut. When the positions of the laser transmitter 41 and the laser receiver 42 are changed by the position adjustment unit 43, the self-supporting films 30 may be cut to have a set pattern or shape. The position adjustment unit 43 may move the laser transmitter 41 and the laser receiver 42 according to a set program (e.g., code readable by a processor).

The laser cutter 40 may emit the laser beam to be parallel to a moving direction of the self-supporting films 30. The self-supporting films 30 may move in the X-axis direction, and the laser transmitter 41 and the laser receiver 42 may also be disposed in the X-axis direction to face each other so that the laser beam may move in the X-axis direction.

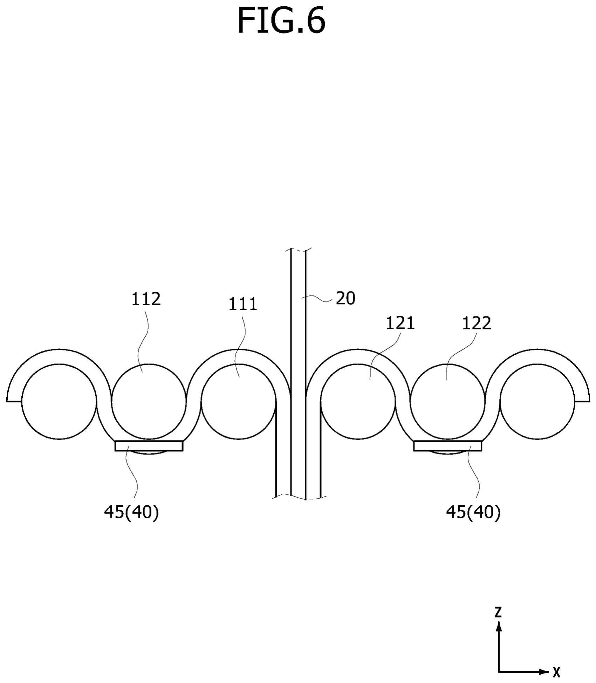

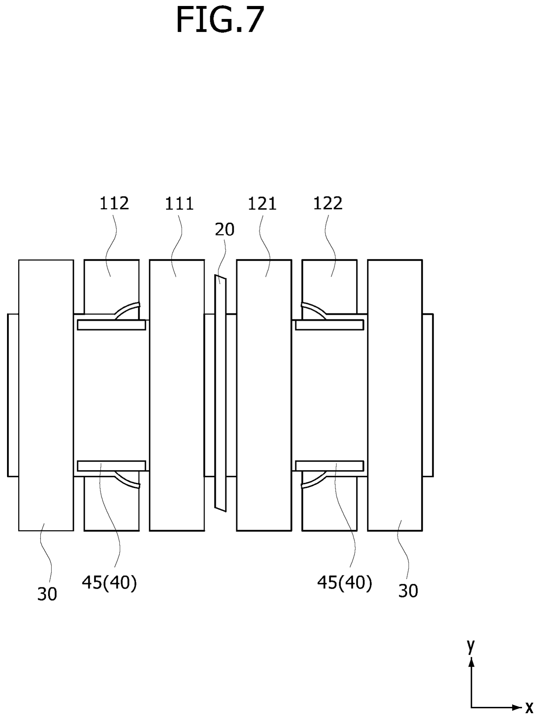

FIG. 6 is a schematic side view illustrating a state in which a laser cutter 40 according to an embodiment of the present disclosure emits a laser beam to be parallel to a moving direction of a self-supporting film 30 passing lower portions of rollers 10. FIG. 7 is a schematic bottom view illustrating a state in which the laser cutter 40 according to an embodiment of the present disclosure emits a laser beam to be parallel to the moving direction of the self-supporting film 30 passing the lower portions of the rollers 10. Referring to FIGS. 6 and 7, the laser cutter 40 may include lower cutters 45.

The lower cutters 45 may cut the self-supporting films 30 passing the lower portions of the rollers 10. The laser beams emitted from the lower cutters 45 may approach lower portions of the rollers 10. The lower cutters 45 may cut the self-supporting films 30 passing a lower portion of the first transfer roller 112 of the first rollers 11. The lower cutters 45 may cut the self-supporting films 30 passing a lower portion of the second transfer roller 122 of the second rollers 12.

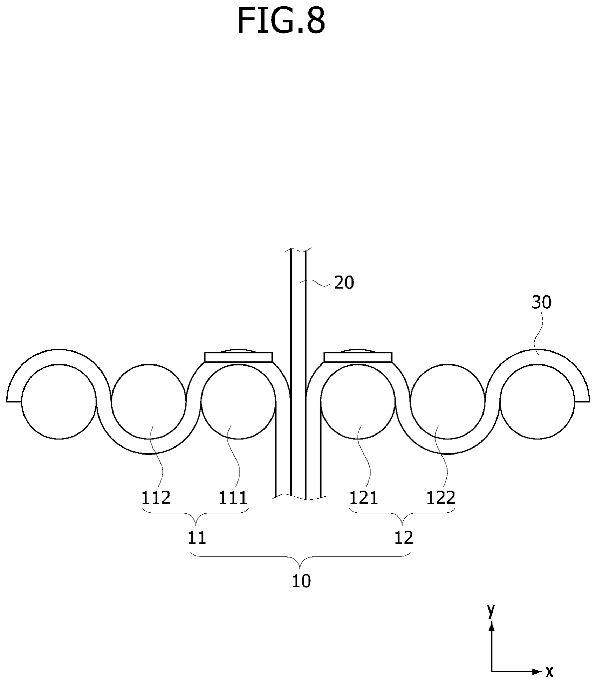

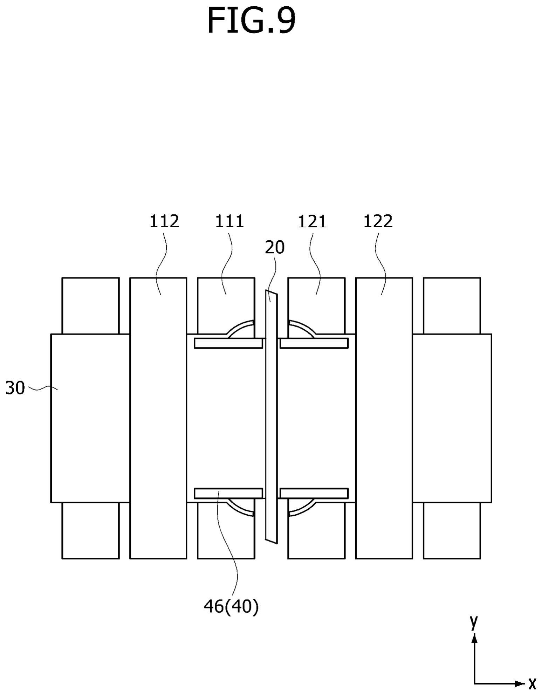

FIG. 8 is a schematic side view illustrating a state in which a laser cutter 40 according to an embodiment of the present disclosure emits a laser beam to be parallel to a moving direction of a self-supporting film 30 passing upper portions of rollers 10. FIG. 9 is a schematic bottom view illustrating a state in which the laser cutter 40 according to an embodiment of the present disclosure emits a laser beam to be parallel to the moving direction of the self-supporting film 30 passing the upper portions of the rollers. Referring to FIGS. 8 and 9, the laser cutter 40 may include upper cutters 46.

The upper cutters 46 may cut the self-supporting films 30 passing the upper portions of the rollers 10. The laser beams emitted from the upper cutters 46 may approach upper portions of the rollers 10. The upper cutters 46 may cut the self-supporting films 30 passing an upper portion of the first attachment roller 111 of the first rollers 11. The upper cutter 46 may cut the self-supporting films 30 passing an upper portion of the second attachment roller 121 of the second rollers 12.

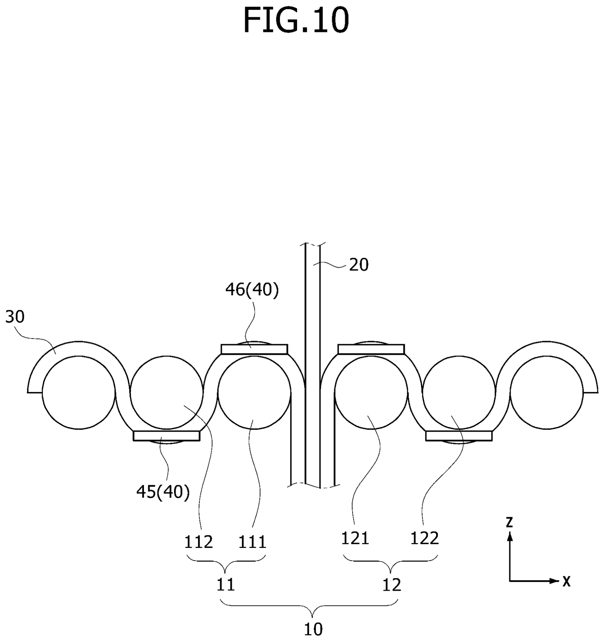

FIG. 10 is a schematic side view illustrating a state in which a laser cutter 40 according to an embodiment of the present disclosure emits a laser beam to be parallel to a moving direction of a self-supporting film 30 passing upper and lower portions of rollers 10. Referring to FIG. 10, the laser cutter 40 may include lower cutters 45 and upper cutters 46.

The lower cutters 45 may cut the self-supporting films 30 passing a lower portion of the rollers 10. The laser beams emitted from the lower cutters 45 may approach the lower portions of the rollers 10. The lower cutters 45 may cut the self-supporting films 30 passing a lower portion of the first transfer roller 112 of the first rollers 11. The lower cutters 45 may cut the self-supporting films 30 passing a lower portion of the second transfer roller 122 of the second rollers 12.

The upper cutters 46 may cut the self-supporting films 30 passing the upper portions of the rollers 10. The laser beams emitted from the upper cutters 46 may approach the upper portions of the rollers 10. The upper cutters 46 may cut the self-supporting films 30 passing the upper portion of the first attachment roller 111 of the first roller 11. The upper cutters 46 may cut the self-supporting films 30 passing the upper portion of the second attachment roller 121 of the second roller 12.

The self-supporting films 30 may be cut by alternately passing the lower cutters 45 and the upper cutters 46. A middle point of the self-supporting films 30 to a lower portion thereof may be cut by the lower cutters 45, and the middle point of the self-supporting films 30 to an upper portion thereof may be cut by the upper cutters 46. Accordingly, it is possible to suppress the laser beams emitted from the lower cutter 45 and the upper cutters 46 from being brought into direct contact with the rollers 10.

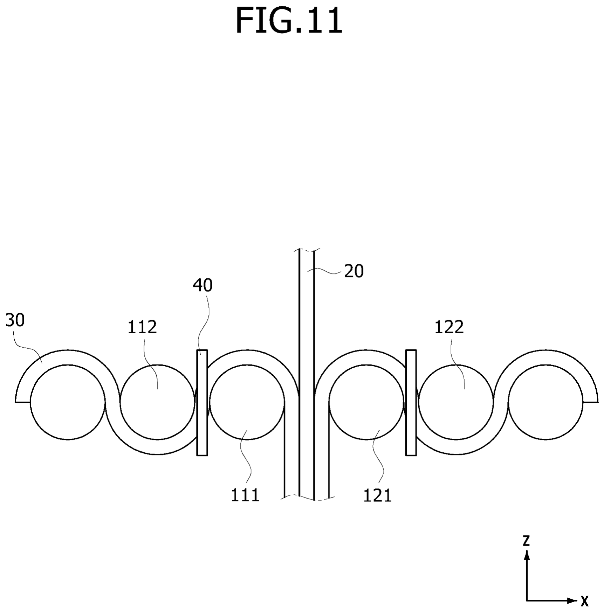

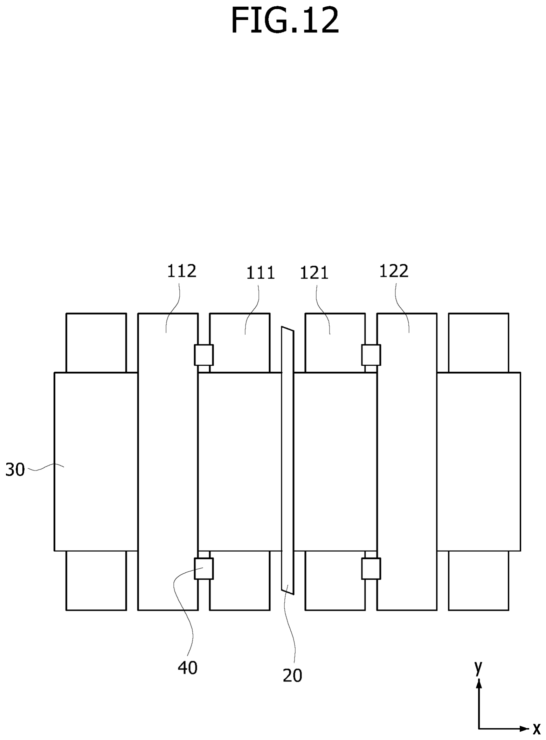

FIG. 11 is a schematic side view illustrating a state in which a laser cutter 40 according to an embodiment of the present disclosure emits a laser beam to be perpendicular to rollers 10 and a moving direction of a self-supporting film passing the rollers 10. FIG. 12 is a schematic plan view illustrating a state in which the laser cutter according to an embodiment of the present disclosure emits a laser beam to be perpendicular to the rollers and the moving direction of the self-supporting film passing the rollers. Referring to FIGS. 11 and 12, the laser cutter 40 may emit a laser beam to be perpendicular to the moving direction of the self-supporting films 30. The self-supporting films 30 may move in the X-axis direction, and the laser transmitter 41 and the laser receiver 42 may be disposed in the Z-axis direction to face each other so that the laser beam may move in the Z-axis direction.

The laser cutter 40 may cut the self-supporting films 30 passing between the rollers 10. The laser beam emitted from the laser cutter 40 may cut the self-supporting films 30 while passing between the first attachment roller 111 and the first transfer roller 112. The laser beam emitted from the laser cutter 40 may cut the self-supporting films 30 while passing the second attachment roller 121 and the second transfer roller 122.

In order to prevent the laser beam emitted from the laser cutter 40 from interfering with the rollers 10, the width of the laser beam is smaller than a gap between the rollers 10. The gap between the rollers 10 may be adjusted according to the width of the laser beam emitted from the laser cutter 40.

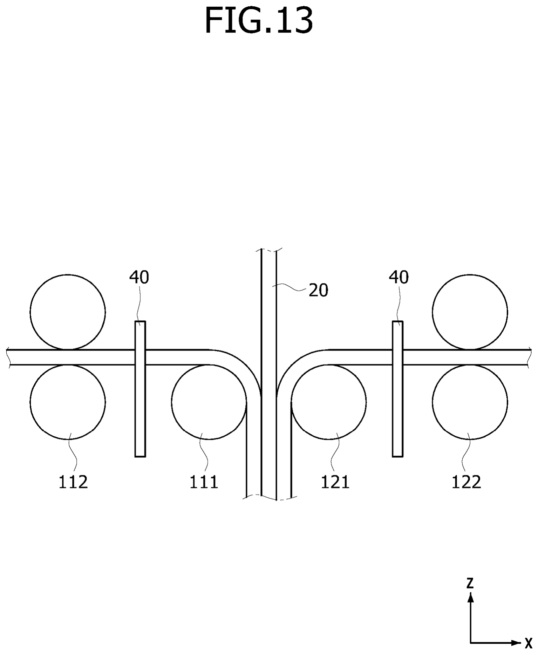

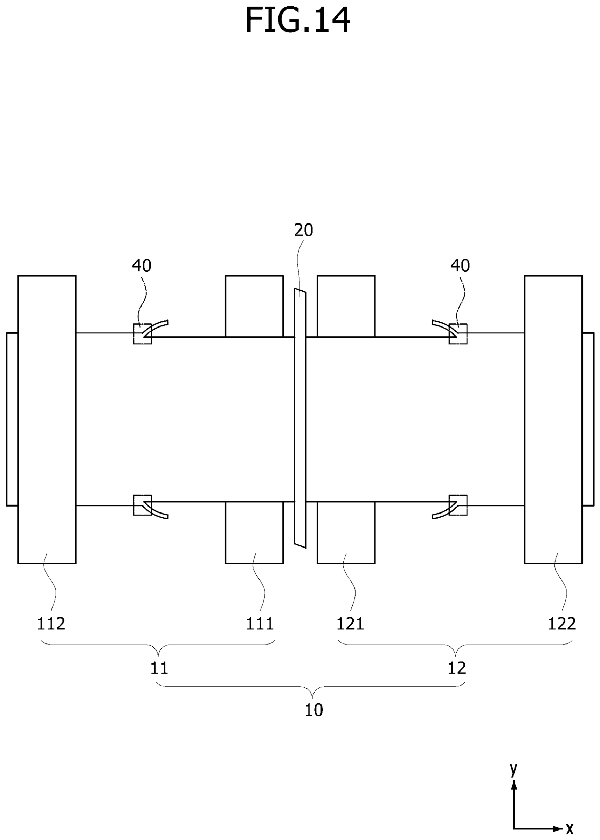

FIG. 13 is a schematic side view illustrating a state in which a laser cutter 40 according to another embodiment of the present disclosure emits a laser beam to be perpendicular to rollers 10 and a moving direction of a self-supporting film 30 passing the rollers 10. FIG. 14 is a schematic plan view illustrating a state in which the laser cutter according to another embodiment of the present disclosure emits a laser beam to be perpendicular to the rollers 10 and the moving direction of the self-supporting film 30 passing the rollers 10. Referring to FIGS. 13 and 14, the first transfer roller 112 may be disposed as a pair of the first transfer roller 112 in the Z-axis direction to face each other, and the self-supporting films 30 may pass between the pair of the first transfer roller 112 and then move between the first attachment roller 111 and the substrate 20 so that the self-supporting films 30 may be attached to the substrate 20. The second transfer roller 122 may be disposed as a pair of the second transfer roller 122 in the Z-axis direction to face each other, and the self-supporting films 30 may pass between the pair of the second transfer roller 122 and then move between the second attachment roller 121 and the substrate 20 so that the self-supporting films 30 may be attached to the substrate 20.

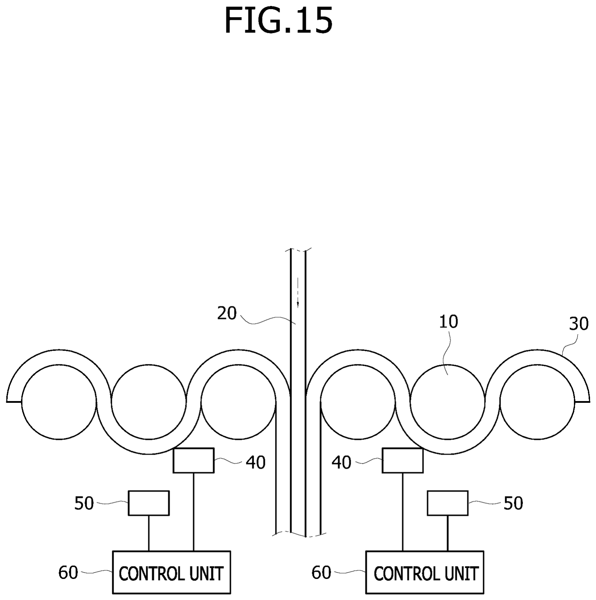

FIG. 15 is a schematic view illustrating a state in which a sensor unit 50 (e.g., sensor) and a control unit 60 (e.g., controller) are added to the electrode plate processing device 1 according to an embodiment of the present disclosure. Referring to FIG. 15, the electrode plate processing device 1 according to an embodiment of the present disclosure may further include the sensor unit 50 and the control unit 60.

The sensor unit 50 may detect a state of at least one of the rollers 10, the substrate 20, and the self-supporting films 30. The sensor unit 50 may detect whether an abnormality is present in a facility or material used for processing an electrode plate.

The control unit 60 may receive a detection signal of the sensor unit 50 and control an operation of the laser cutter 40. When the sensor unit 50 detects an abnormality in the facility, the operation of the laser cutter 40 may be stopped due to a control signal of the control unit 60. In this case, an additional warning signal may be provided to the operator.

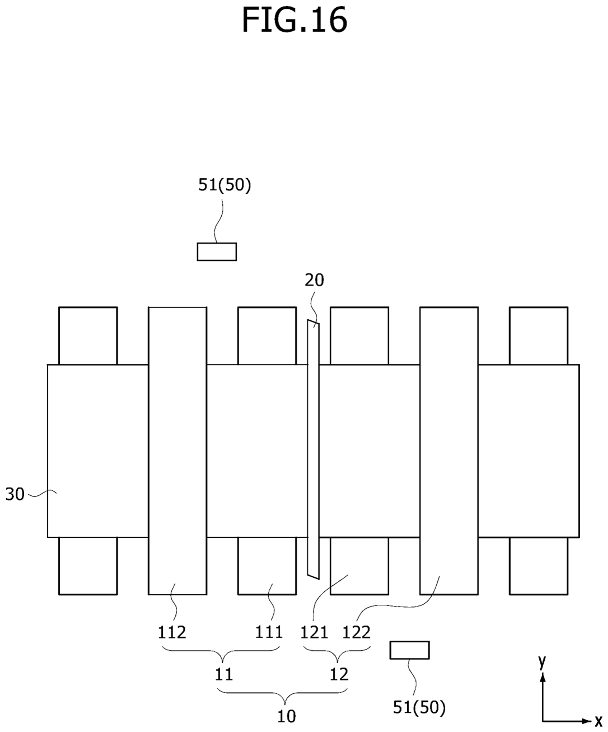

FIG. 16 is a schematic plan view illustrating a state in which the sensor unit 50 according to an embodiment of the present disclosure detects a gap between rollers 10. Referring to FIG. 16, the sensor unit 50 may include a first sensor 51 that detects whether a gap between the rollers 10 is within a set distance. The first sensor 51 may be spaced apart from the rollers 10 in the Y-axis direction to detect the rollers 10. The first sensor 51 may detect a gap between the first attachment roller 111 and the first transfer roller 112. The first sensor 51 may detect a gap between the second attachment roller 121 and the second transfer roller 122. When a measurement value of the first sensor 51 is less than the set distance (e.g., predetermined distance), the gap between the rollers 10 may be smaller than the design, which may cause interference with the laser beam, and thus the control unit 60 may stop the operation of the laser cutter 40.

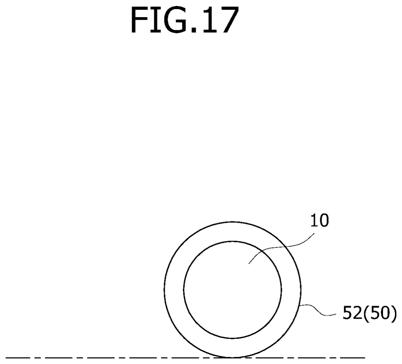

FIG. 17 is a schematic view illustrating a state in which the sensor unit 50 according to an embodiment of the present disclosure detects whether the rollers 10 are being processed. Referring to FIG. 17, the sensor unit 50 may include a second sensor 52 that detects whether the rollers 10 are processed by a laser cutter 40. The second sensor 52 may be formed on a surface of the roller 10 or may be embedded in the roller 10. The second sensor 52 may detect a laser beam emitted from the laser cutter 40. When the second sensor 52 detects the laser beam, the control unit 60 may stop the operation of the laser cutter 40 to prevent damage to the roller 10 caused by the laser beam.

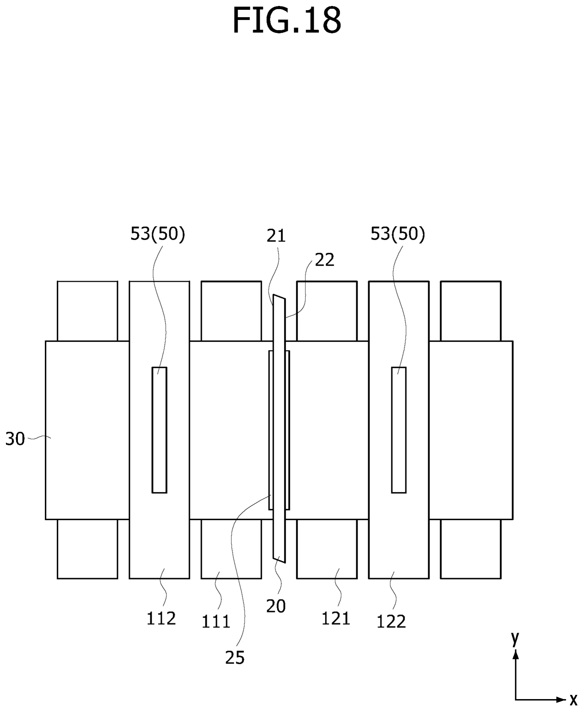

FIG. 18 is a schematic view illustrating a state in which the sensor unit 50 according to an embodiment of the present disclosure detects an adhesive layer 25 of a substrate. Referring to FIG. 18, the sensor unit 50 may include a third sensor 53 that detects a width of the adhesive layer 25 of the substrate 20. The third sensor 53 may be disposed above the roller 10 (e.g., above the first transfer roller 112 and the second transfer roller 122) and disposed to face the first surface 21 and the second surface 22. When the third sensor 53 detects the width of the adhesive layer 25, the control unit 60 may control the laser cutter 40 so that the self-supporting films 30 corresponds to the width of the adhesive layer 25 and processes the self-supporting films 30.

In the electrode plate processing device 1 according to an embodiment of the present disclosure, the laser cutter 40 may pass the rollers 10 and cut the self-supporting films 30 attached to the substrate 20 to have an appropriate size.

In the electrode plate processing device 1 according to an embodiment of the present disclosure, the laser cutter 40 may emit a laser beam to be parallel to a moving direction of the self-supporting films 30.

In the electrode plate processing device 1 according to an embodiment of the present disclosure, the laser cutter 40 may emit a laser beam to be perpendicular to the moving direction of the self-supporting films 30.

In the electrode plate processing device 1 according to an embodiment of the present disclosure, the laser cutter 40 may be fixed so that a shape of the self-supporting films 30 may be maintained uniformly.

In the electrode plate processing device 1 according to an embodiment of the present disclosure, a position of the laser cutter 40 may be changed so that self-supporting films 30 having various shapes may be formed.

The methods, processes, and/or operations described herein may be performed by code or instructions to be executed by a computer, processor, controller, or other signal processing device. For example, the controllers controlling the sensor unit 50 and the laser cutter 40 may be a computing device, e.g., a workstation computer, a desktop computer, a laptop computer, a tablet computer, or the like, and may be implemented as a simple controller, a complex processor, e.g., a microprocessor, a central processing unit (CPU), a graphics processing unit (GPU) etc., or a processor composed of software, dedicated hardware or firmware, or the like. The computer, processor, controller, or other signal processing device may be those described herein or one in addition to the elements described herein.

Electrodes manufactured using slurries containing solvents use excessive amounts of solvent during the process of manufacturing the same.

A dry method without the use of organic solvents involves attaching a self-supporting film to a substrate on which an adhesive layer is formed, and the self-supporting film moves while passing a plurality of rollers to be in close contact with the substrate.

In the electrode plate processing device according to the embodiment of the present disclosure, a position of the laser cutter can vary to achieve the degree of freedom in the shape of the self-supporting film.

However, the effects obtainable through the present disclosure are not limited to the above effects, and other technical effects that are not mentioned will be clearly understood by those of ordinary skill in the art from the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure should be defined by the claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode plate processing device, comprising:
a plurality of rollers;
a substrate between the plurality of rollers;
a self-supporting film movable by the plurality of rollers, the self-supporting film being attached to the substrate; and
a laser cutter configured to cut the self-supporting film to a predetermined width using a laser beam of the laser cutter.

2. The electrode plate processing device as claimed in claim 1, wherein the plurality of rollers include:
one or more first rollers arranged in a first lateral direction of the substrate; and
one or more second rollers arranged in a second lateral direction of the substrate.

3. The electrode plate processing device as claimed in claim 2, wherein the one or more first rollers include:
a first attachment roller disposed to face the substrate, the first attachment roller configured to guide the self-supporting film to be attached to the substrate; and
one or more first transfer rollers configured to guide the self-supporting film to the first attachment roller.

4. The electrode plate processing device as claimed in claim 2 or 3, wherein the one or more second rollers include:
a second attachment roller disposed to face the substrate, the second attachment roller configured to guide the self-supporting film to be attached to the substrate; and
one or more second transfer rollers configured to guide the self-supporting film to the second attachment roller.

5. The electrode plate processing device as claimed in any preceding claim, wherein the laser cutter includes:
a laser transmitter configured to emit the laser beam toward a moving path of the self-supporting film; and
a laser receiver configured to receive the laser beam from the laser transmitter.

6. The electrode plate processing device as claimed in claim 5, wherein the laser cutter further includes a position adjustment unit configured to adjust a position of the laser transmitter and a position of the laser receiver.

7. The electrode plate processing device as claimed in claim 6, wherein the position adjustment unit includes:
a main support fixed on a fixture;
a transmitter support coupled to the main support, the transmitter support supporting the laser transmitter and being adjustable in length; and
a receiver support coupled to the main support, the receiver support configured to support the laser receiver and being self-adjustable in length.

8. The electrode plate processing device as claimed in claim 6 or 7, wherein the position adjustment unit is configured to fix the position of the laser transmitter and the position of the laser receiver while cutting the self-supporting film.

9. The electrode plate processing device as claimed in claim 6 or 7, wherein the position adjustment unit is configured to change the position of the laser transmitter and the position of the laser receiver while cutting the self-supporting film.

10. The electrode plate processing device as claimed in any preceding claim, wherein the laser cutter is configured to emit the laser beam parallel to a moving direction of the self-supporting film.

11. The electrode plate processing device as claimed in claim 10, wherein the laser cutter includes a lower cutter configured to cut the self-supporting film while the self-supporting film passes lower portions of the plurality of rollers.

12. The electrode plate processing device as claimed in claim 10, wherein the laser cutter includes an upper cutter to cut the self-supporting film while the self-supporting film passes passing upper portions of the plurality of rollers.

13. The electrode plate processing device as claimed in claim 10, wherein the laser cutter includes:
a lower cutter for cutting the self-supporting film while the self-supporting film passes lower portions of the plurality of rollers; and
an upper cutter for cutting the self-supporting film while the self-supporting film passes upper portions of the plurality of rollers.

14. The electrode plate processing device as claimed in claim 1, wherein the laser cutter is configured to emit the laser beam perpendicular to a moving direction of the self-supporting film.

15. The electrode plate processing device as claimed in any preceding claim, further comprising:
a sensor unit configured to detect a state of at least one of the plurality of rollers, the substrate and the self-supporting film; and
a control unit configured to receive a detection signal of the sensor unit and control an operation of the laser cutter.
